# EUROPEAN PATENT SPECIFICATION

(11) **EP 2 091 005 B1**
(45) Date of publication and mention of the grant of the patent: **11.07.2012**
(21) Application number: 08101650.3
(22) Date of filing: 15.02.2008
(51) Int. Cl.: G06K 9/03, B42B 5/00, B26F 1/02

(54) **Verification of the punching of signatures based on digital images**
Überprüfung des Stanzens von Signaturen mit digitalen Bildern
Vérification du poinçonnage de signatures par des images numériques

(43) Date of publication of application: 19.08.2009
(73) Proprietor: MECCANOTECNICA S.p.A., I-24025 Gazzaniga - Bergamo (IT)
(72) Inventor: Cordella, Alfredo, 24125 Bergamo (BG) (IT); Boccalari, Davide, 24060 Torre de Roveri (BG) (IT)
(74) Representative: Pezzoli, Ennio

(56) References cited:
- EP-A- 1 586 462
- DE-A1- 10 043 422

## Description

The present invention relates to the bookbinding field. More specifically, the present invention relates to the verification of the punching of bookbinding articles.

Several types of bookbinding products are available to satisfy a number of user requirements. Generally, the bookbinding products (such as books) include blocks of pages, which are bound with different techniques. Particularly, a specific binding technique is based on the punching of bookbinding articles (such as signatures), so as to obtain a row of through-holes (or simply holes) in each one of them. Different (punched) signatures are grouped to form the desired block of pages; these signatures are then bound by inserting a binding element (such as a coil) into the corresponding holes of the signatures.

The hole-based book so obtained is cheap and robust; moreover, it may be laid flat on a desk, and in same cases it may also be folded back on itself. Therefore, this hole-based binding technique is particularly attractive for producing manuals, children books, calendars, cookbooks, and the like.

A critical operation of the above-described hole-based binding process is the punching of the signatures. Indeed, even a single defective signature with the row of holes in a wrong position makes the corresponding whole block of signatures defective. Particularly, the defective block of signatures may prevent the application of the coil (since the corresponding holes of the signatures are not coaxial). This causes a jam of a binding machine used to apply the coils, with the need of a manual intervention by an operator to remove the defective block of signatures. All of the above has a detrimental impact on the yield of the binding machine; moreover, it causes a significant economic loss (since it is necessary to discard a product that is almost complete). In any case, even when the coil can be applied (since the row of holes of the defective signature is only slightly out of place), the resulting book is of poor quality; indeed, the defective signature is askew and then projects outside the other signatures of the book.

Nowadays, the only possibility that is available to verify the correctness of the signatures is of inspecting them manually. For example, the operator may fold a signature transversally to the row of holes to verify its symmetry. Alternatively, the operator may hold a block of signatures up to the light to verify the regularity and the correspondence of the holes of all the signatures.

However, the above-described operations are time consuming and not accurate; moreover, the obtained results strongly depend on the level of attention of the operator. In any case, the signatures may be verified manually only sporadically (for example, at the beginning of the processing of a new batch of signatures or after a regulation of a punching machine). Therefore, it is not possible to detect defective signatures being due to errors that are transient or caused by a drift of the regulation of the punching machine.

Photoelectric and laser sensors are available to detect mechanical elements in different applications (such as in automatic assembly lines). However, these sensors only work with elements having specific shape and size; moreover, they require that the elements to be detected should be provided in a predetermined and repetitive position.

Measuring devices based on laser technology are also available to measure objects with high precision. However, these measuring devices (besides being very expensive) cannot automatically recognize the shape and size of the objects to be measured; moreover, they cannot self-adapt to changes in the position of the objects.

Therefore, none of the above-mentioned systems known in the art lends itself to be used in the specific field at issue. Indeed, in this case the holes in the signatures may have any shape and/or size; moreover, the holes may be arranged in different ways along the signatures. It is also not possible to ensure that the signatures to be verified are always provided exactly in the same position; indeed, the mechanisms that are commonly used to transport the signatures are not very precise (since in this phase no strict accuracy requirements apply).

In its general terms, the present invention is based on the idea of exploiting digital images to verify the punching.

The document DE 100 43 422 A1 discloses a method comprising the features of the preamble of claim 1.

The invention provide a solution as set out in the independent claims. Advantageous embodiments of the invention are set out in the dependent claims.

More specifically, in claim 1 a method is disclosed for verifying a punching of bookbinding articles - such as signatures. Each article includes one or more pages, which are punched to define a row of through-holes; the row of through-holes is adapted to receive a binding element (such as a coil) for binding a block of articles. For each article, the method starts with the step of acquiring one or more images of the article; each image provides a digital representation of at least an edge portion of the article, which includes the row of through-holes (or a part thereof). The images are processed to determine a position of the row of through-holes. It is then possible to verify a correctness of the article according to the position of the row of through-holes.

In claim 16 a software program is disclosed for performing the method of claim 1.

A corresponding verification apparatus is disclosed in claim 17.

A punching machine including this verification apparatus is disclosed in claim 18.

A bookbinding plant including one or more verification apparatus of claim 17 is disclosed in claim 19.

The invention itself, as well as further features and the advantages thereof, will be best understood with reference to the following detailed description, given purely by way of a non-restrictive indication, to be read in conjunction with the accompanying drawings. In this respect, it is expressly intended that the figures are not necessary drawn to scale and that, unless otherwise indicated, they are merely intended to conceptually illustrate the structures and procedures described herein. Particularly:
FIG.1 is a conceptual representation of a bookbinding plant wherein the solution according to an embodiment of the invention can be applied,
FIGs.2A-2B illustrate a verification apparatus of the bookbinding plant in detail,
FIG.3 shows an example of digital images that may be acquired in a possible scenario of application of the solution according to an embodiment of the invention,
FIGs.4A-4D illustrate the main phases of a process implementing the solution according to an embodiment of the invention,
FIGs.5A-5E illustrate the main phases of a process implementing the solution according to another embodiment of the invention, and
FIG.6 is a collaboration diagram representing the roles of the main components that may be used to practice the solution according to an embodiment of the invention.

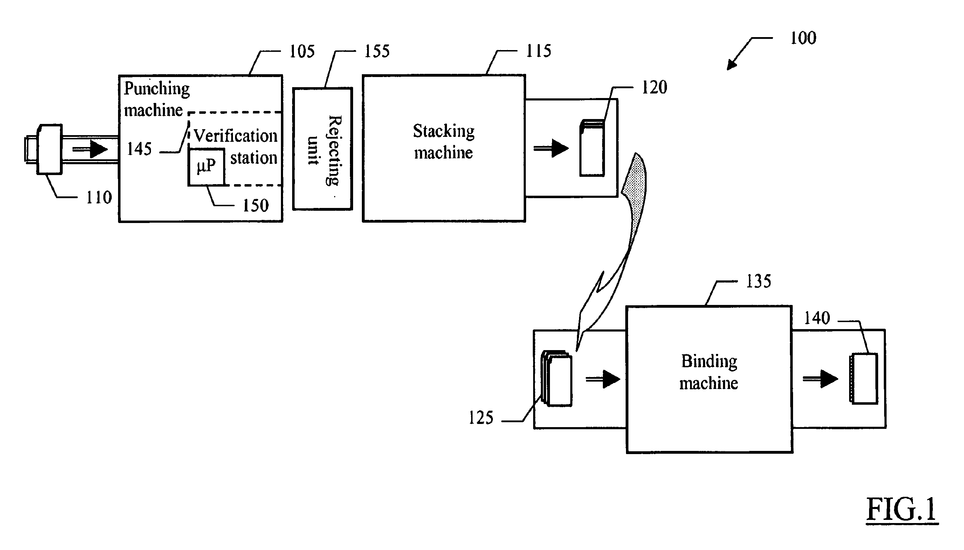

With reference in particular to FIG.1, a portion of a bookbinding plant 100 is illustrated. The bookbinding plant 100 includes a punching machine 105, which is used to punch signatures 110 (or other bookbinding elements). Particularly, a batch of signatures 110 of the same type is fed in succession to the punching machine 105; the punching machine 105 forms a row of (through-) holes in each signature 110 by means of a corresponding die (not shown in the figure). The punching machine 105 is followed by a stacking machine 115, wherein the (punched) signatures are arranged in stacks 120 (which are then collected manually). The same process is repeated for the other types of signatures that are required to form the desired books. The signatures of different type are then arranged in the correct order (for example, in a gathering machine, not shown in the figure), so as to group them into blocks of signatures 125 corresponding to the books to be produced. The blocks of signatures 125 (also referred to as book blocks) are fed in succession to a binding machine 135. The binding machine 135 applies a plastic coil (or another binding element) to each block of signatures 125, so as to obtain a corresponding book 140.

In the solution according to an embodiment of the present invention, as described in detail in the following, the punching machine 105 also includes a verification station 145 - whose operation is controlled by a microprocessor (µP) 150. The verification station 145 acquires one or more digital images of each signature 110 (after it has been punched). The digital images are processed, so as to determine the position of the corresponding row of holes. This information can then be used to verify the correctness of the signature 110.

As a result, any defective signature can be promptly identified so as to prevent its use (which would generate a defective block of signatures). This strongly reduces any jams of the binding machine 135 (caused by the impossibility of applying the coils to defective blocks of signatures). All of the above has a beneficial impact on the yield of the binding machine 135 (and of the whole plant 100), and it reduces the economic loss that would instead be caused by the discarding of products being almost complete. In any case, the proposed technique improves the quality of the produced books, since it avoids using defective signatures that would be askew and then projecting outside the other signatures of the books.

The desired result is achieved in a very simple way and with high accuracy. Moreover, the signatures 110 can now be verified continuously so as to detect defective signatures in any operative conditions (even when they are due to errors that are transient or caused by a drift of a regulation of the punching machine 105).

As it will be apparent in the following of the present description, the proposed technique (based on the use of digital images to determine the position of the row of holes) works with any shape and size of the holes, and with any arrangement thereof along the signatures 110; moreover, this technique is substantially insensitive to the exact position of the signatures 110 to be verified.

In an embodiment of the invention, a rejecting unit 155 is also interposed between the punching machine 105 and the stacking machine 115. The rejecting unit 155 is controlled by the verification station 145; particularly, when a defective signature is detected, the rejecting unit 155 is actuated so as to prevent it from reaching the stacking machine 115. In this way, any defective signature can be discarded automatically without any impact on the operation of the plant 100.

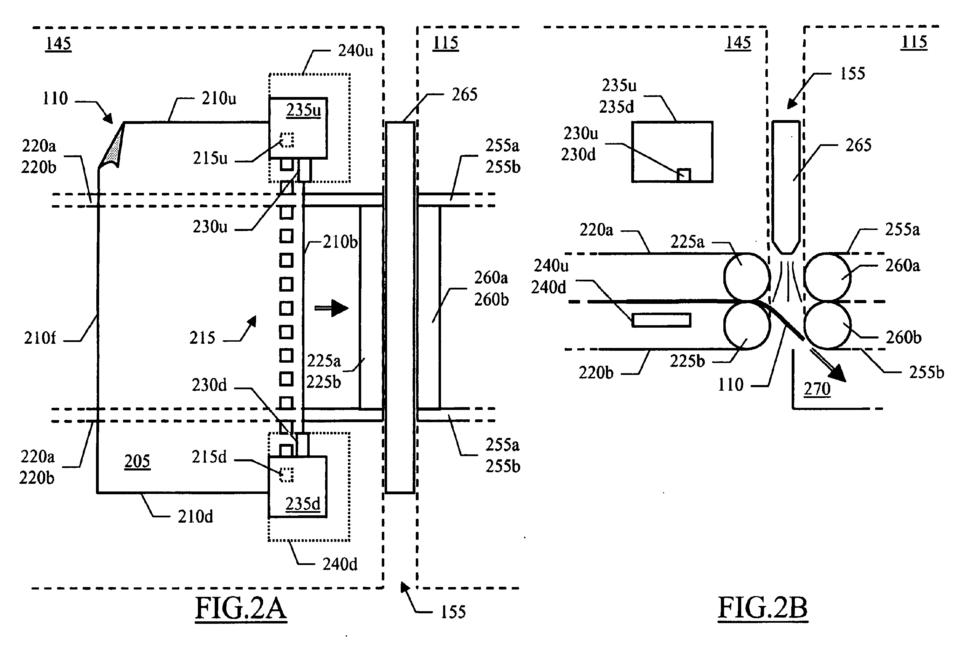

The structure of a verification apparatus (formed by the verification station 145 and the rejecting unit 155) according to an embodiment of the invention is illustrated in FIG.2A (in plant view) and in FIG.2B (in side view).

Particularly, each signature 110 is formed by a large printed sheet, which is folded one or more times so as to form several pages 205; a last fold of the signature 110 defines a back edge 210b (or back), whereas an edge opposite the back 210b defines a front edge 210f (or lip); the back 210b is connected to the lip 210f by means of an upper edge 210u (or head) and a lower edge 210d (or foot). The row of holes (denoted with 215) is arranged close to the back 210b (parallel thereto); more specifically, the row of holes 215 extends from an upper end hole 215u (close to an upper corner between the back 210b and the head 210u) to a lower end hole 215d (close to a lower corner between the back 210b and the foot 210d).

The signature 110 is transported through the verification station 145 (with the back 210b turned forwards) by means of multiple pairs of belts - for example, four (only two shown in the figure for the sake of simplicity). Particularly, each pair includes a continuous belt 220a that is tight between two shafts 225a (only one shown in the figure), and another continuous belt 220b that is tight between two shafts 225b (only one shown in the figure). The belts 220a and 220b face to each other (along a horizontal portion of their paths), so as to hold and drag the signature 110 arranged between them; particularly, the belt 220a rotates counterclockwise and the belt 220b rotates clockwise, thereby transporting the signature 110 rightwards. A distance between the different pairs of belts 220a,220b may be regulated according to a format of the signature 110, in order to leave free an upper corner portion (including one or more holes 215 starting from the upper end hole 215u) and a lower corner portion (including one or more holes 215 starting from the lower end hole 215d).

Two sensors (for example, implemented with corresponding photo-cells) detect the arrival of the signature 110; more specifically, an upper sensor 230u detects the arrival of the upper corner portion of the signature 110, and a lower sensor 230d detects the arrival of the lower corner portion of the signature 110. Each sensor 230u and 230d is associated with a digital still camera 235u and 235d and a corresponding flash lamp 240u and 240d, respectively. The lamp 240u,240d and the camera 235u,235d are arranged at opposite sides of the common path of the facing belts 220a and 220b that hold the signature 110 (for example, with the lamp 240u,240d below the signature 110 and the camera 235u,235d above the signature 110).

When each sensor 230u,230d detects the arrival of the signature 110, it actuates the associated camera 235u,235d and lamp 240u,240d. In this way, the camera 235u,235d acquires a digital image of the corresponding corner portion of the signature 110 that is back-illuminated by the lamp 240u,240d - so as to show off its (head/foot) side edges 210u,210d, back 210d and holes 215. The use of two independent sensors 230u and 230d ensures that the relevant corner portion of the signature 110 is always within a framing zone of the associated camera 235u and 235d, respectively. Moreover, the use of two cameras 235u and 235d allows acquiring images with high resolution (which facilitate their processing).

The stacking machine 115 includes further pairs of belts - as above, each one including a continuous belt 255a that is tight between two shafts 260a (only one shown in the figure) and another continuous belt 255b that is tight between two shafts 260b (only one shown in the figure). The belts 255a,255b face the belts 220a,220b with a small gap between them (for example, 5-20 cm); in this way, the signature 110 coming from the belts 220a,220b is catch by the belts 255a,255b - possibly after a short period in which it is completely free.

The rejecting unit 155 may be implemented with a blower 265 (for example, formed by a series of nozzles), which is arranged along the gap between the belts 255a,255b and the belts 220a,220b. The blower 265 is actuated when the signature 110 is identified as defective (as described in detail in the following). In this case, the blower 265 provides an air jet that pushes the defective signature 110 downwards; as a result, the defective signature 110 is diverted from an entrance of the (facing) belts 255a,255b. Therefore, the defective signature 110 falls below the stacking machine 115 and it is collected into a basket 270. This allows discarding any defective signature in a very simple way, with no impact on the operation of the punching machine.

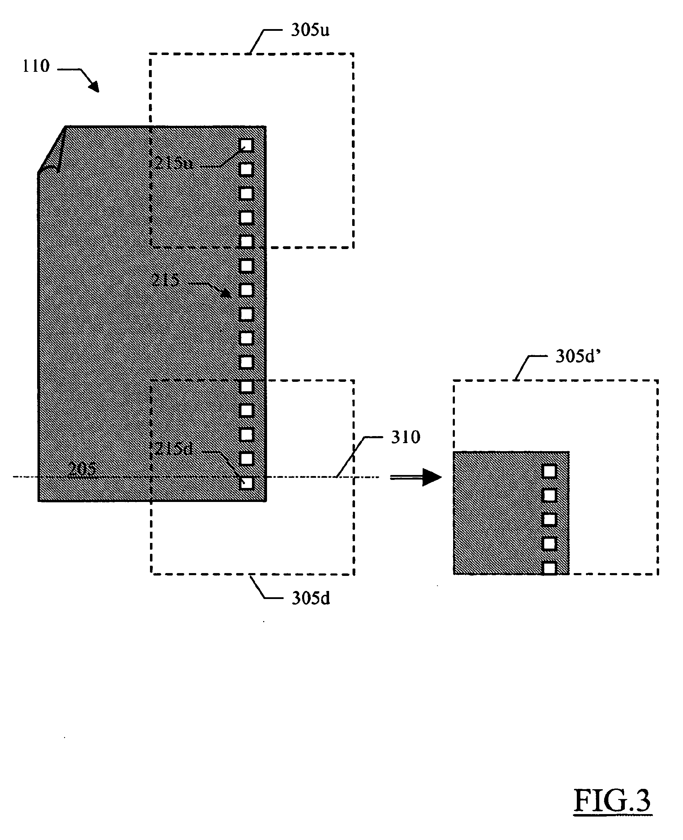

Moving to FIG.3, the (upper) image acquired by the upper camera - denoted with 305u - includes a representation of the upper corner portion of the signature 110 (with one or more holes 215 starting from the upper end hole 215u), while the (lower) image acquired by the lower camera - denoted with 305d - includes a representation of the lower corner portion of the signature 110 (with one or more holes 215 starting from the lower end hole 215d). In both cases, the image 305u,305d is defined by a bitmap consisting of a matrix of values for respective basic picture elements (pixels); typically, each pixel value consists of a gray-scale level (for example, coded on 8 bits) defining the brightness of the corresponding pixel - from 0 (black) to 255 (white). As shown in the figure, the representation of the page 205 of the signature 110 is black (since it is not illuminated by the lamp); conversely, the representation of the holes 215 and a region outside the signature 110 is white (since they are illuminated by the lamp without any obstacle).

Preferably, the lower image 305d is overturned about a symmetry axis 310 thereof, which is parallel to the feeding direction of the signature 110 (i.e., along the belts of the punching machine). This operation generates an (overturned) lower image 305d' having a same pattern as the upper image 305u (i.e., with the corresponding corner portion of the signature extending from its lower left end in the example at issue). Therefore, it is possible to apply the same processing to both the images 305u and 305d' (with a significant simplification of its implementation).

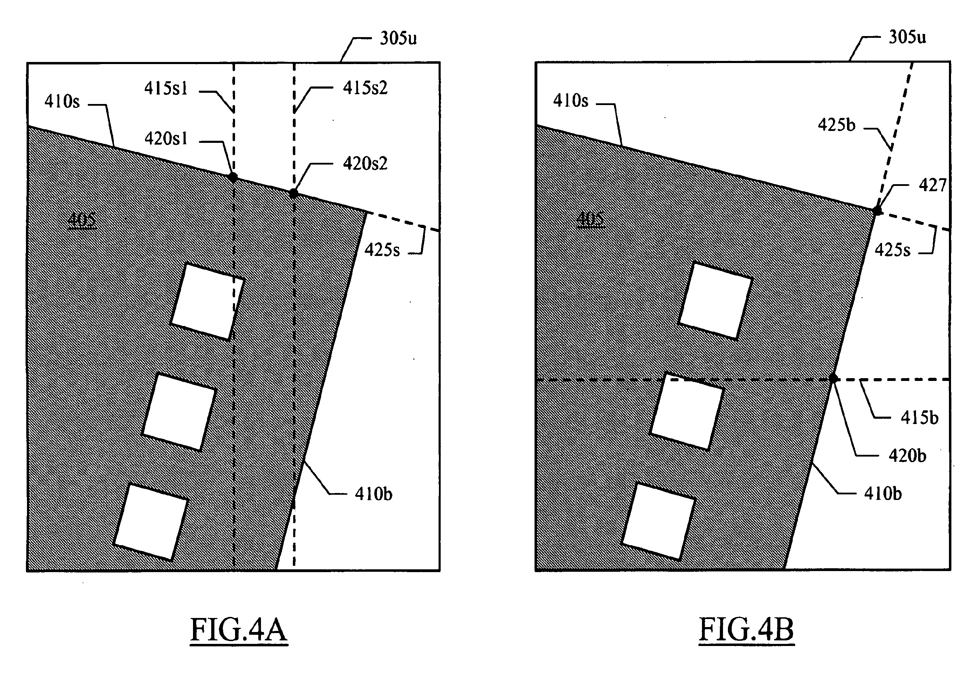

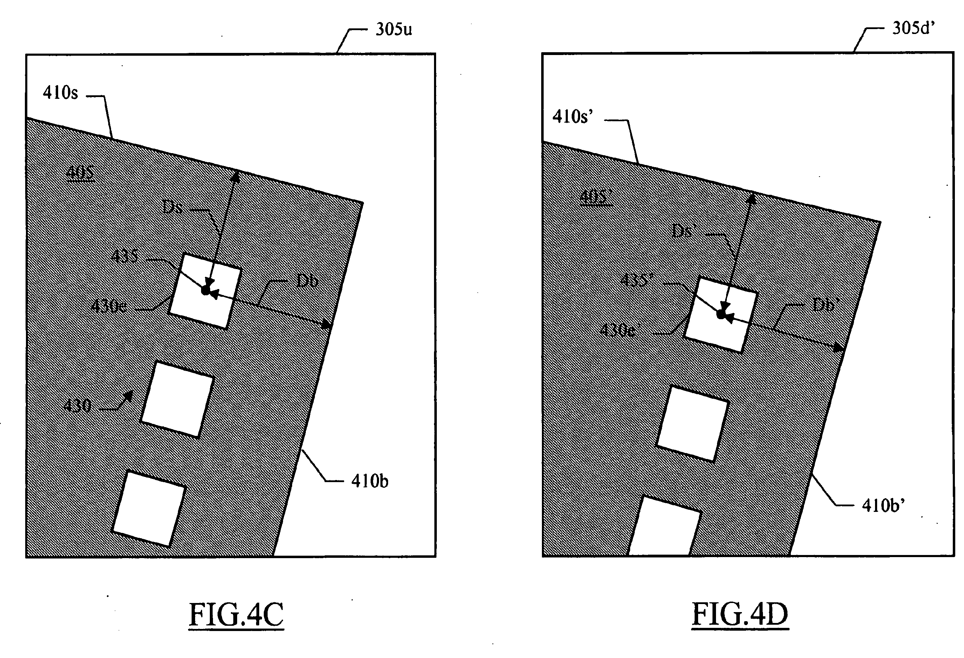

The main phases of a process that can be carried out to verify the correctness of each signature in an embodiment of the invention are illustrated in FIGs.4A-4D. With reference in particular to FIG.4A, for each image of the signature (such as the upper image 305u in the example at issue) the process starts with the identification of a page area 405 representing the part of the page included in the corresponding corner portion of the signature; as indicated above, the page area 405 is formed by black pixels (i.e., with very low pixel values - such as below 10-20), as distinct from the rest of the image 305u that is instead formed by white pixels (i.e., with very high pixel values - such as above 235-245). The page area 405 is delimited by a side segment 410s and a back segment 410b; the side segment 410s represents a portion of the corresponding side edge of the signature (consisting of the head in the case of the upper image 305u), while the back segment 410b represents a portion of the back of the signature.

For this purpose, two search lines 415s1 and 415s2 are calculated; each search line 415s1,415s2 consists of a vertical straight line (i.e., a column of pixel values). The search lines 415s1 and 415s2 are arranged at a predetermined distance from a left margin of the image 305u (for example, corresponding to 1-2 cm and 3-4 cm, respectively), which arrangement ensures that they always cross the side segment 410s. Each search line 415s1 and 415s2 is then scanned downwards until reaching a transition from white pixels to black pixels (at the side segment 410s), which defines a transition point 420s1 and 420s2, respectively. Preferably, the transition is detected when the pixels become black and they remain so for a predetermined number of pixels (such as 2-5); in this way, it is possible to filter out any speckle in the image 305u (consisting of a few black pixels), which speckle might bring about a (wrong) earlier identification of the side segment 410s. A side line 425s (corresponding to the side segment 410s) is then calculated, as a straight line passing through the transition points 420s1 and 420s2.

Moving to FIG.4B, a single search line 415b (consisting of a horizontal straight line) is now calculated. The search line 415b is arranged below a limit point wherein the side line 425s reaches a right margin of the image 305u, so as to ensure that it always crosses the back segment 410b; for example, the search line 415b is arranged at a distance from this limit point equal to 1/3 of its distance from a bottom margin of the image 305u. The search line 415b is then scanned leftwards until reaching a transition from white pixels to black pixels (at the back segment 410b), which defines a transition point 420b. A back line 425b (corresponding to the back segment 410b) is now calculated, as a straight line perpendicular to the side line 425s and passing through the transition point 420b.

It is then possible to calculate an intersection point 427 wherein the side line 425s and the back line 425b cross (which intersection point 427 represents a corresponding corner of the signature, consisting of the right upper corner in the example at issue). Therefore, the side segment 410s is identified by the portion of the side line 425s at the left of the intersection point 427, while the back segment 410b is identified by the portion of the back line 425b below the intersection point 427. The page area 405 is then identified as the portion of the image 305u below the side segment 410s and at the left of the back segment 410b.

As shown in FIG.4C, the process continues by identifying one or more hole areas 430, each one representing a corresponding hole of the signature. The hole areas 430 are formed by groups of white pixels within the page area 405. For example, a hole area 430 is identified when a group reaching a predetermined number of pixels (such as at least 50-100) has an average value higher than a threshold (such as 220-230); as above, this allows filtering out any speckle in the image 305u (consisting of a few white pixels within the page area 405). The hole area 430 being closest to the side segment 410s is selected as an end hole area (denoted with 430e); the end hole area 430e then represents the corresponding end hole of the signature (i.e., the upper end hole in the example at issue).

The above-described procedure allows identifying the representation of the end hole dynamically; it should be noted that this result is achieved irrespectively of the arrangement of the hole areas 430 in the page area 405 (i.e., the position of the row of holes in the signature); therefore, the proposed method is of general applicability to any type of punching (with no pre-setting). Moreover, the same result is achieved irrespectively of the orientation of the page area 405 (i.e., the position of the signature when the corresponding image is acquired); therefore, the method is insensitive to any shift of the signature (as magnified in the example illustrated in the figure).

The process continues by determining a barycentre 435 of the end hole area 430e. For example, for this purpose there is calculated an average of the coordinates (i.e., row number and column number) of the pixel values forming the end hole area 430e; preferably, the average is weighted according to the pixel values (so as to reduce the contribution of any darker pixels). At this point, it is possible to calculate a distance Ds of the barycentre 435 from the side segment 410s (representing a distance of the end hole from the side edge of the signature), and a distance Db of the barycentre 435 from the back segment 410b (representing a distance of the same end hole from the back of the signature). The above-mentioned values are independent of the shape and size of the end hole; therefore, this procedure allows determining the position of the end hole in any condition.

The same operations are repeated for the (overturned) lower image 305d'. As above, there is identified a page area 405' delimited by a side segment 410s' (now representing the foot of the signature) and a back segment 410b'. An end hole area 430e' (now representing the lower end hole) is then identified within the page area 405', and its barycentre 435' is calculated. As above, a distance Ds' of the barycentre 435' from the side segment 410s', and a distance Db' of the barycentre 435' from the back segment 410b' are calculated (to define a position of the lower end hole with respect to the foot and the back of the signature).

In this way, the distances Ds, Db, Ds' and Db' represent the position of the row of holes in the signature. The choice of determining the position of only the (upper and lower) end holes strongly facilitates the processing of the corresponding images; nevertheless, this allows providing very accurate results.

The values so obtained may be used in several manners to verify the correctness of the signature (as described in detail in the following). For example, it is possible to verify whether the row of holes is symmetric (when the distances Ds and Ds' are equal), or to verify whether the row of holes is parallel to the back (when the distances Db and Db' are equal). Moreover, it is also possible to verify whether the distances Ds, Db, Ds' and Db' are equal to corresponding reference values (for example, set during a learning phase that is performed before processing each batch of signatures). In any case, the information about the position of the row of holes in the signatures may also be used to regulate the punching machine accordingly.

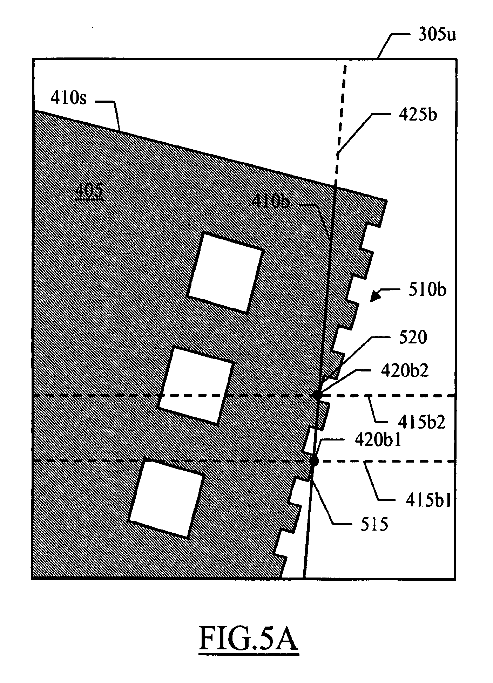

With reference now to FIG.5A (hereinafter, the elements corresponding to the ones illustrated in the preceding figures are denoted with the same references, and their explanation is omitted for the sake of simplicity), the above-described procedure for identifying the back segment and the side segment ensures that they are always perpendicular, even when the signature has an indented back; in this case, a series of tabs (typically resulting from operations performed on the signature during preceding phases of the production process) projects from the back of the signature (thereby defining a notch between each pair of them). Therefore, the back is represented in the image 305u (similar considerations apply to the image 305d') with a back curve 510b, which now consists of a broken line that forms alternated projections 515 (for the tabs) and recesses 520 (for the notches) in the page area 405.

In this case, an error might occur if the back segment 410b (representing the back curve 510b) were identified with the same procedure as the one for the side segment 410s. Indeed, let us assume that two search lines 415b1 and 415b2 are calculated (each one consisting of a horizontal straight line). Each search line 415b1 and 415b2 is then scanned leftwards until reaching a transition from white pixels to black pixels (at the back curve 510b), which defines a transition point 420b1 and 420b2, respectively. The back line 425b is then calculated, as a straight line passing through the transition points 420b1 and 420b2. However, the two search lines 415b1 and 415b2 may cross the back curve 510b in any position. For example, as shown in the figure, the search line 415b1 may cross a projection 515 (at the transition point 420b1), while the search line 415b2 may cross a recess 520 (at the transition point 420b2). Therefore, the back line 425b (passing through the transition points 420s1 and 420s2) would define a back segment 410b that does not represent the back of the signature correctly (being tilted with respect to its actual direction).

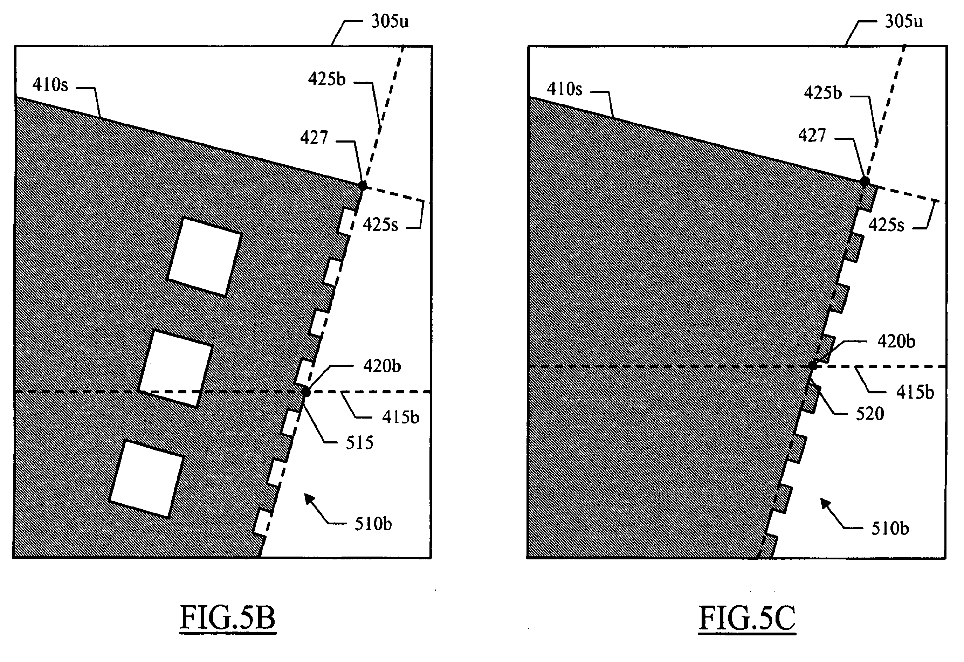

However, neither can the back segment as identified with the proposed solution (even if perpendicular to the side segment 410s) be used to represent the back of the signature, since it is not possible to ensure that it always corresponds to an internal envelope of the back curve 510b correctly representing an internal limit of the back of the signature (with the back segment that may instead correspond to an external envelope of the back curve 510b representing an external limit of the back of the signature). Indeed, as shown in FIG.5B, when the search line 415b crosses the back curve 510b at a projection 515, the back line 425b corresponds to the external envelope of the back curve 510b. Conversely, as shown in FIG.5C, when the search line 415b crosses the back curve 510b at a recess 520, the back line 425b corresponds to the internal envelope of the back curve 510b.

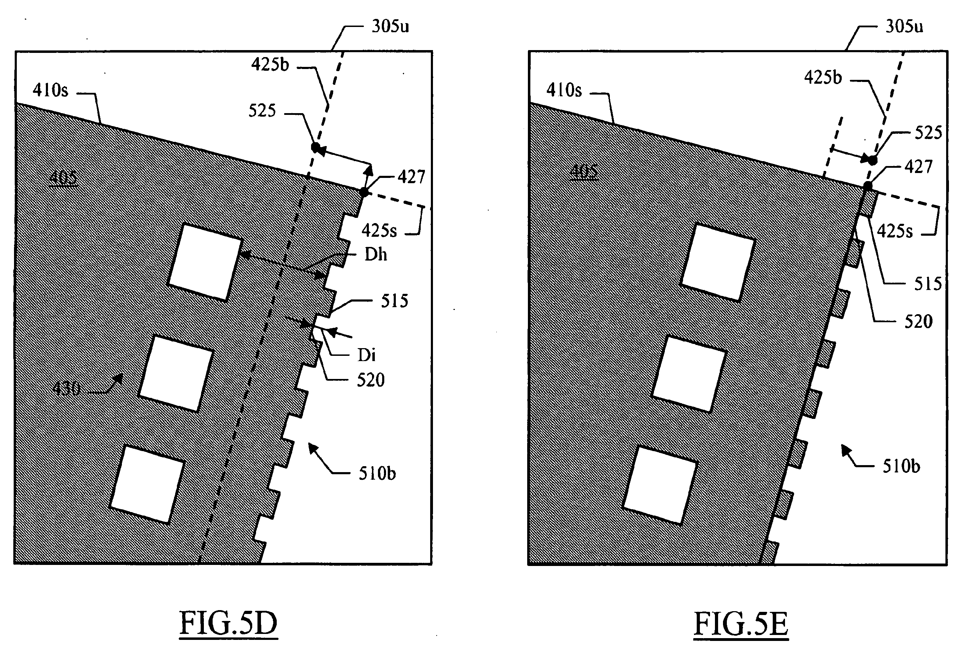

Moving to FIG.5D, in order to solve this ambiguity the side line 425s, the back line 425b and the intersection point 427 are calculated as described above. However, a scan point 525 is now determined on the back line 425b. The scan point 525 is arranged at a predetermined distance from the intersection point 427 (for example, corresponding to 1-2 cm) outside the page area 405 (i.e., above it). The back line 425b is then translated towards the inside of the page area 405 (i.e., leftwards) by a predefined offset (for example, corresponding to 0.2-0.5 mm). The offset is selected to be higher than a value Di, which represents a measure of an expected irregularity of the back of the signature as defined by the distance between a top of its tabs and a bottom of its notches (i.e., a height of the projections 515 with respect to the recesses 520); at the same time, the offset is selected to be lower than a value Dh, which represents an expected distance of the row of holes from the internal limit of the back (i.e., a distance of the hole areas 430 from the internal envelope of the back curve 510b). This ensures that the (translated) back line 425b will be always comprised between the internal envelope of the back curve 510b and the hole areas 430.

The back line 425b is then scanned towards the page area 405 (i.e., downwards) starting from the scan point 525. If a single transition from white pixels to black pixels (at the side segment 410s) is encountered as far as the bottom margin of the image 305u, this means that the back line 425b is inside the page area 405 (as shown in the figure). Therefore, the back line 425b is translated towards the outside of the page area 450 (i.e., rightwards) with a predefined pitch (typically, a single pixel).

As shown in FIG.5E, the same operations are repeated until two transitions are encountered during the scanning of the back line 425b - i.e., a transition from white pixels to black pixels (at an uppermost projection 515) and a further transition from black pixels to white pixels (at an uppermost recess 520). When this condition is detected, the preceding position of the back line 425b represents the internal envelope of the back curve 510b. The process can then continues exactly as described above. It should be noted that the same procedure may also be applied in general (even if the back of the signature is not indented), by stopping the translation of the back line 425b when there are encountered two transitions (as above) or no transition (meaning that the back line 425b is outside the page area 405).

The proposed solution allows determining the position of the end holes correctly in any situation (always with reference to the internal envelope of the back curve 510b properly representing the back of the signature), so as to allow carrying out meaningful comparisons as described in the foregoing.

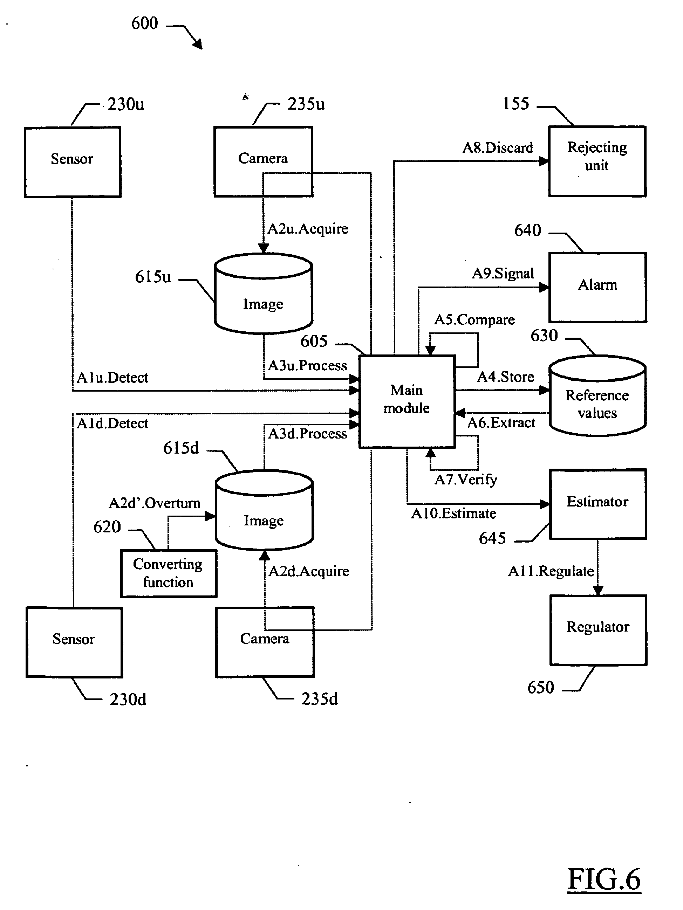

Considering now FIG.6, the main (software and/or hardware) components that can be used to implement the solution according to an embodiment of the invention are denoted as a whole with the reference 600. The information (programs and data) is typically stored on a mass memory of the microprocessor of the verification station and loaded (at least partially) into its working memory when the programs are running. Particularly, the figure describes the static structure of the system (by means of the corresponding components) and its dynamic behavior (by means of a series of exchanged messages, each one representing a corresponding action, denoted with sequence numbers preceded by the symbol "A").

In detail, when the upper sensor 230u or the lower sensor 230d detects the arrival of the signature, it accordingly notifies a main module 605 of the verification station (corresponding actions "Alu.Detect" or "A2d.Detect"). In response thereto, the main module 605 switches on the upper lamp or the lower lamp, respectively (so as to back-illuminate the signature); at the same time, it triggers the upper camera 235u to acquire the image of the upper corner portion of the signature, or the lower camera 235d to acquire the image of the lower corner portion of the signature, respectively. The image acquired by the upper camera 235u is stored into a file 615u (action "A2u.Acquire") and the image acquired by the lower camera 235d is stored into a file 615d (action "A2d.Acquire"). The file 615d is accessed by a converting function 620; the converting function 620 updates the image stored in the file 615d by overturning it with respect to its symmetry axis (action "A2d'.Overturn").

The main module 605 extracts the upper image stored in the file 615u, and processes it so as to determine the position of the upper end hole, as defined by its distances Ds,Db from the head and the back of the signature (action "A3u.Process"). Likewise, the main module 605 extracts the (overturned) lower image stored in the file 615d, and processes it so as to determine the position of the lower end hole, as defined by its distances Ds',Db' from the foot and the back of the signature (action "A3d.Process").

During a learning phase (performed before processing each batch of signatures) these distances Ds, Db, Ds' and Db' are used to set the reference values in a table 630 (action "A4.Store"). More specifically, in this phase a sample signature is punched and then fed to the verification station (so as to determine the distances Ds, Db, Ds' and Db'); the values so obtained are stored into the table 630 (as the reference values for the corresponding distances). Once the sample signature exits the punching machine, it is verified manually by an operator. If the sample signature has not been punched correctly, the same process is repeated with another sample signature (until the desired results are obtained). In this way, the verification of the punching may be substantially automated.

Instead, during operation of the punching machine, the distances Ds, Db, Ds' and Db' are compared to each other to verify the correctness of the signature (Action "A5.Compare"). Particularly, the distance Ds (of the upper end hole from the head) may be compared with the distance Ds' (of the lower end hole from the foot) to verify the symmetry of the row of holes. For example, it is possible to determine that the row of holes is not symmetric in the signature when the difference between the distances Ds and Ds' exceeds a predefined threshold (such as 1-5% of a length of the back of the signature). In addition or in alternative, the distance Db (of the upper end hole from the back) may be compared with the distance Db' (of the lower end hole from the same back) to verify the parallelism of the row of holes; for example, it is possible to determine that the row of holes is not parallel to the back when the difference between the distances Db and Db' exceeds a predefined threshold (such as 1-5% of a length of each side edge of the signature). In another configuration of the verification station, the reference values are extracted from the table 630 (action "A6.Extract"). The distances Ds, Db, Ds' and Db' are then compared with the corresponding reference values to verify the correctness of the signature (action "A7.Verify"). For example, the signature is deemed defective when the sum of the differences between each distance Ds, Db, Ds' and Db' and the corresponding reference value exceeds a predefined threshold (such as 1-5% of the sum of all the reference values).

In any case, when the signature is identified as defective, the main module 605 transmits a command signal to the rejecting unit 155. In response thereto, the rejecting unit 155 is activated (for example, by switching on the blower), so as to discard the defective signature (action "A8.Discard").

Moreover, the main module 605 controls an alarm device 640 of the punching machine to signal the error condition to the operator. For example, the main module 605 may actuate a buzzer and/or it may display an error message on a monitor of the punching machine (action "A9.Signal"). In this way, the operator is promptly informed of the discarding of the defecting signature, and s/he may intervene as deemed necessary.

In addition or in alternative, for each signature the main module 605 calculates an error based on the differences between the actual values of the distances Ds, Db, Ds' and/or Db' and their expected values (according to any of the above-mentioned methods); this error is continuously passed to an estimator 645. The estimator 645 accordingly calculates a corresponding correction to be applied to the punching machine (action "A10.Estimate"). For each distance, for example, a critical condition is detected when the corresponding error exceeds a predefined threshold (such as 10-30% of the expected value) for a predefined number of consecutive signatures (such as 3-10). When this happens, a cumulative error is calculated as a running average of the error in these signatures; the correction is then set to the opposite of the cumulative error. The proposed correction allows adjusting the operation of the punching machine smoothly (filtering out possible transient errors and preventing any oscillations in the regulation of the punching machine). The estimator 645 drives a regulator 650 so as to cause it to regulate the punching machine automatically according to the above-described correction (action "A11.Regulate"). In this way, the punching machine becomes a smart system with self-healing capability. Alternatively, the regulator 650 stops operation of the punching machine, and simply suggests the correction to the operator (for example, by displaying it on the corresponding monitor); this strongly facilitates the operation of regulating the punching machine, nevertheless leaving the operator the decision about how to proceed.

Naturally, in order to satisfy local and specific requirements, a person skilled in the art may apply to the solution described above many logical and/or physical modifications and alterations. More specifically, although the present invention has been described with a certain degree of particularity with reference to preferred embodiment(s) thereof, it should be understood that various omissions, substitutions and changes in the form and details as well as other embodiments are possible. Particularly, the proposed solution may even be practiced without the specific details (such as the numerical examples) set forth in the preceding description to provide a more thorough understanding thereof; conversely, well-known features may have been omitted or simplified in order not to obscure the description with unnecessary particulars. Moreover, it is expressly intended that specific elements and/or method steps described in connection with any disclosed embodiment of the invention may be incorporated in any other embodiment as a matter of general design choice.

Particularly, the proposed solution lends itself to be implemented with an equivalent method (by using similar steps, removing some steps being non-essential, or adding further optional steps); moreover, the steps may be performed in a different order, concurrently or in an interleaved way (at least in part).

Similar considerations apply if the verification of the punching is applied to single sheets, covers, or any equivalent bookbinding articles (even at the level of their blocks); moreover, these articles may be bound with metallic coils or spirals, bent wires (or wiros), folded combs, or any other binding elements; in any case, the same solution may also be applied to the production of simple blocks of signatures (for example, for use in ring binders). Likewise, the holes may be formed in any shape (such as squares, circles or rectangles), number, and arrangement.

Nothing prevents implementing the proposed solution with pixel values of different type (for example, each one expressed in Red, Green and Blue components). Moreover, it is possible to assign different ranges of values to the white pixels and the black pixels for the identification of the page area and the hole areas; more generally, the same result may also be achieved with alternative algorithms (such as based on convolution operators).

The use of any other formulas for calculating the barycentre of each end hole area is contemplated (for example, of the non-linear type).

Although the use of the upper and lower end holes to determine the position of the whole row of holes provides the best performance of the proposed solution, nothing prevents exploiting two or more other holes for the same purpose.

Similar considerations apply if the hole areas are identified in a different way (for example, following a sub-sampling of the image to simplify its processing).

The above-described algorithms to identify the side segment and the back segment in each image are not intended to be exhaustive; for example, it is also possible to identify the side line as indicated above, to scan it rightwards until reaching a transition from black pixels to white pixels (representing the intersection point), and then calculating the back line perpendicular to the side line at the intersection point, or to identify both the side line and the back line with two corresponding search lines (when the back of the signature is not indented).

Moreover, nothing prevents using the external envelope of the back curve to determine the back line (even if this choice is less accurate); in any case, it is also possible always to use the algorithm for the non-indented back (for example, when only the symmetry of the row of holes is to be verified).

In a different embodiment of the invention, the same processing may also be applied to a single image (to determine the position of two or more holes that are represented in this image).

Similar considerations apply if the sensors, the cameras and/or the corresponding lamps are arranged in a different way; moreover, it is also possible to use equivalent devices suitable to achieve the same result (even without any back-illumination of the signature). In any case, in a simplified implementation of the invention, a single sensor may be used to detect the arrival of the signature and to trigger one or more cameras accordingly.

In an embodiment of the invention, the two images may also be processed concurrently; in any case, nothing prevents using dedicated algorithms for the upper image and for the lower image, respectively (without any overturning thereof).

The above-described examples of use of the information about the position of the row of holes to verify the correctness of the signature are merely illustrative, and they must not be interpreted in a limitative manner; more generally, it is possible to apply the proposed verifications individually, in combination, or to replace them with any other comparisons.

Alternatively, the reference values may be learned by taking into account two or more sample signatures. However, the possibility of setting the reference values manually by the operator is contemplated.

Similar considerations apply if the rejecting unit is implemented in a different way (for example, with a pushing element). Moreover, any other action may be performed in response to the identification of a defective signature. For example, it is possible to stop operation of the punching machine (to leave the operator the decision about how to intervene), to simply discard the defective signature without any warning to the operator, and the like; moreover, the corresponding information may also be logged, so as to be available offline for diagnostic purposes.

The correction to be applied to the punching machine may be estimated from the detected errors with more sophisticated algorithms (for example, based on fuzzy logic techniques).

The proposed solution may also be implemented on a separate computer that controls the punching machine or even the whole bookbinding plant (or more generally on any data processing system). Similar considerations apply if the program (which may be used to implement each embodiment of the invention) is structured in a different way, or if additional modules or functions are provided; likewise, the memory structures may be of other types, or may be replaced with equivalent entities (not necessarily consisting of physical storage media). In any case, the program may take any form suitable to be used by any data processing system or in connection therewith (for example, within a virtual machine); particularly, the program may be in the form of external or resident software, firmware, or microcode (either in object code or in source code - for example, to be compiled or interpreted). Moreover, it is possible to provide the program on any computer-usable medium; the medium can be any element suitable to contain, store, communicate, propagate, or transfer the program. For example, the medium may be of the electronic, magnetic, optical, electromagnetic, infrared, or semiconductor type; examples of such medium are fixed disks (where the program can be pre-loaded), removable disks, tapes, cards, wires, fibers, wireless connections, networks, broadcast waves, and the like. In any case, the solution according to an embodiment of the present invention lends itself to be implemented even with a hardware structure (for example, integrated in a chip of semiconductor material), or with a combination of software and hardware.

Similar considerations apply if the verification apparatus (i.e., the verification station with the possible rejecting unit) has a different structure or includes equivalent components.

The verification apparatus may be embedded in the punching machine (as described above), or it may be provided in any position along a production line (for example, in a conveyor).

Likewise, the proposed solution may be applied to a plant with an equivalent architecture or with other machines (for example, with the blocks of signatures that are formed manually or directly in the binding machine). In any case, in a complex plant with multiple punching machines, it is possible to have a verification apparatus for each punching machine, a common verification apparatus for groups of them, or even a single verification apparatus for all the punching machines.

## Claims

1. A method (A1-A11) for verifying a punching of bookbinding articles (110), each article including at least one page (205) being punched to define a row of through-holes (215) adapted to receive a binding element for binding a block of articles (125), wherein for each article the method includes the steps of:
acquiring (A1u-A2u,A1d-A2d) at least one image (305u,305d) of the article, each image providing a digital representation of at least an edge portion of the article including at least part of the row of through-holes,
processing (A3u,A2d'-A3d) the at least one image to determine a position (Ds,Db,Ds',Db') of the row of through-holes, **characterized by**
verifying (A4-A7) a correctness of the article according to the position of the row of through-holes.

2. The method (A1-A11) according to claim 1, wherein each image (305u,305d) includes a plurality of pixel values, the pixel values corresponding to the at least one page (205) having intensities in a first range and the pixel values corresponding to the through-holes (215) and to a region outside the at least one page having intensities in a second range, the step of processing the at least one image (A3u,A2d'-A3d) including, for each image:
identifying a page area (405) of the image representing at least part of the at least one page, the page area being formed by the pixel values in the first range, and
identifying at least one through-hole area (430) of the image each one representing a corresponding through-hole, each through-hole area being formed by a group of pixel values in the second range within the page area.

3. The method (A1-A11) according to claim 2, wherein a plurality of through-hole areas (430) are identified in the at least one image, the step of processing the at least one image (A3,A2b'-A3') including:
calculating a center (435) of each through-hole area (430), the center defining a position (Ds,Db;Ds',Db') of the corresponding through-hole (215), and
calculating the position of the row of through-holes according to the positions of the through-holes.

4. The method (A1-A11) according to claim 3, wherein the row of through-holes (215) includes a first end through-hole (215u) and a second end through-hole (215d), the step of processing the at least one image (A3u,A2d'-A3d) including:
identifying a first end through-hole area (430e) representing the first end through-hole and a second end through-hole area (403e') representing the second end through-hole, and
calculating a first center (435) of the first end through-hole area and a second center (435') of the second end through-hole area defining the position (Ds,Db) of the first end through-hole and the position (Ds',Db') of the second end through-hole, respectively, the positions of the first and second end through-holes representing the position (Ds,Db,Ds',Db') of the row of through-holes.

5. The method (A1-A11) according to claim 4, wherein the row of through-holes (215) extends from a first corner portion of the article (110) with the first end through-hole (215d) to a second corner portion of the article with the second end through-hole (215u), the step of processing the at least one image (A3u,A2d'-A3d) including, for each corner portion:
identifying a side segment (410s;410s') and a back segment (410b;410b') delimiting the page area (405;405'), the side segment and the back segment representing at least a portion of a corresponding side edge (210u;210d) and a back edge (210b), respectively, of the at least one page (205) joining to define the corner portion,
identifying the corresponding end through-hole area (430e;430e') as the group of pixel values in the second range within the page area closest to the side segment,
calculating a side distance (Ds;Ds') and a back distance (Db;Db') of the center (435;435') of the end through-hole area from the side segment and the back segment, respectively, the side distance and the back distance representing the position (Ds,Db,Ds',Db') of the end through-hole.

6. The method (A1-A11) according to claim 5, wherein the step of identifying the side segment (410s;410s') and the back segment (410b;410b') includes:
identifying two side transition pixels (420s1,420s2) corresponding to a transition of the pixel values from the second range to the first range transversally to an expected direction of the side edge (210s),
calculating a side straight line (425s) corresponding to the side segment (410s), the side straight line passing through the side transition points,
identifying a back transition pixel (420b) corresponding to a transition of the pixel values from the second range to the first range transversally to an expected direction of the back edge (210b), and
calculating a back straight line (425b) corresponding to the back segment (410b), the back straight line being perpendicular to the side straight line and passing through the back transition point.

7. The method (A1-A11) according to claim 6, wherein the step of identifying the side segment (410s;410s') and the back segment (410b;410b') further includes:
translating the back straight line (425b) towards the inside of the page area (405) by a predefined offset comprised between a measure (Di) of an expected irregularity of the back edge (210b) and an expected distance (Dh) of the row of through-holes (215) from an internal limit of the back edge, and
translating the back straight line towards the outside of the page area until a number of transitions of the pixel values between the first range and the second range being detected by scanning the back straight line starting from the outside of the page area is different from 1.

8. The method (A1-A11) according to any claim from 5 to 7, wherein the step of acquiring the at least one image (A1u-A2u,A1d-A2d) includes:
acquiring a first image (305u) providing a digital representation of the first corner portion of the article (110) by a first digital camera (235u), and
acquiring a second image (305d) providing a digital representation of the second corner portion of the article by a second digital camera (235d),
and wherein the step of processing the at least one image (A3u,A2d'-A3d) includes:
processing the first image to determine the position of the first end through-hole (215u), and
processing the second image to determine the position of the second end through-hole (215d).

9. The method (A1-A11) according to claim 8, wherein the step of acquiring the at least one image (A1u-A2u,A1d-A2d) includes, for each image (305u,305d):
detecting (A1u;A1d) an arrival of the corresponding corner portion of the article (110) in a framing zone of the corresponding digital camera (235u;235d), and
triggering (A2u;A2d) the acquisition of the image in response to the detection of the arrival.

10. The method (A1-A11) according to claim 8 or 9, wherein the step of processing the at least one image (A3u,A2d'-A3d) includes:
overturning (A2d') the second image (305d) with respect to a symmetry axis thereof (310) being parallel to a feeding direction of the article (110), and
processing (A3u,A3d) the first image (305u) and the overturned second image (305d') with a common processing module (605).

11. The method (A1-A11) according to any claim from 5 to 10, wherein the step of verifying the correctness of the article (A4-A7) includes:
verifying (A5) the correctness of the article (110) according to a comparison of the side distance (Ds) and/or the back distance (Db) of the first end trough-hole (215u) with the side distance (Ds') and/or the back distance (Db') of the second end trough-hole (215d), respectively.

12. The method (A1-A11) according to any claim from 1 to 11, wherein the step of verifying the correctness of the article (A4-A7) includes:
verifying (A6-A7) the correctness of the article according to a comparison of the position (Ds,Db,Ds',Db') of the row of through-holes (215) with a reference.

13. The method (A1-A11) according to claim 12, further including the steps of:
acquiring (A1u-A2u,A1d-A2d) at least one sample image (305u,305d) for at least one sample article (110) to be learned,
determining (A3u,A2s'-A3s) a sample position (Ds,Db,Ds',Db') of the corresponding row of through-holes (215) by processing the at least one sample image of each sample article, and
setting (A4) the reference according to the at least one sample position.

14. The method (A1-A11) according to any claim from 1 to 13, further including the step of:
discarding (A8) the article (110) when identified as defective in response to a negative verification of the correctness.

15. The method (A1-A11) according to any claim from I to 14, wherein the articles (110) are punched in a punching machine (105), the method further including the step of:
estimating (A10) a correction to be applied to the punching machine according to the position (Ds,Db,Ds',Db') of the row of through-holes (215) of at least one article when identified as defective in response to a negative verification of the correctness.

16. A software program (600) for performing the method (A1-A11) of any claim from 1 to 15 when the software program is executed on a data processing system (150).

17. A verification apparatus (145,155) for verifying a punching of bookbinding articles (110), the verification apparatus including means (150) being configured for controlling operation of the verification apparatus to perform the steps of the method (A1-A11) according to any claim from 1 to 15.

18. A punching machine (105) for punching bookbinding articles (110), the punching machine including the verification apparatus (145,155) according to claim 17.

19. A bookbinding plant (100) including at least one punching machine (105) for punching bookbinding articles (110), and at least one verification apparatus (145,155) according to claim 17.

## Patentansprüche

1. Verfahren (A1-A11) zum Verifizieren einer Stanzung von Buchbindeartikeln (110), wobei jeder Artikel mindestens ein Blatt beinhaltet, das gestanzt wird, um eine Reihe von Durchgangsbohrungen (215) zu bilden, die zwecks Binden eines Blocks von Artikeln (125) zum Entgegennehmen eines Bindungselementes angepasst sind, wobei das Verfahren für jeden Artikel folgende Schritte beinhaltet:
Erlangen (A1u-A2u, A1d-A2d) mindestens eines Bildes (305u, 305d) des Artikels, wobei jedes Bild eine digitale Repräsentation mindestens eines Kanten-Teilbereichs des Artikels einschließlich mindestens eines Teils der Reihe von Durchgangsbohrungen beinhaltet,
Verarbeiten (A3u, A2d'-A3d) des mindestens einen Bildes, um eine Position (Ds, Db, Ds', Db') der Reihe von Durchgangsbohrungen zu bestimmen,
**gekennzeichnet durch**
Verifizieren (A4-A7) einer Korrektheit des Artikels gemäß der Position der Reihe von Durchgangsbohrungen.

2. Verfahren (A1-A11) nach Anspruch 1, wobei jedes Bild (305u, 305d) eine Mehrzahl von Pixelwerten beinhaltet, wobei die Pixelwerte entsprechend des mindestens einen Blattes (205) Intensitäten in einem ersten Wertebereich aufweisen und die Pixelwerte entsprechend den Durchgangsbohrungen (215) und entsprechend eines Bereiches außerhalb des mindestens einen Blattes Intensitäten in einen zweiten Wertebereich aufweisen, wobei der Schritt des Verarbeitens des mindestens einen Bildes (A3u, A2d'-A3d) für jedes Bild beinhaltet:
Identifizieren eines Blattgebietes (405) des Bildes, das mindestens einen Teil des mindestens einen Blattes repräsentiert, wobei das Blatt durch die Pixelwerte in dem ersten Wertebereich gebildet wird, und
Identifizieren mindestens eines Durchgangsbohrungs-Gebietes (430) des Bildes, von denen jedes eine entsprechende Durchgangsbohrung repräsentiert, wobei jedes Durchgangsbohrungs-Gebiet durch eine Gruppe von Pixelwerten in dem zweiten Wertebereich innerhalb des Blattgebietes gebildet wird.

3. Verfahren (A1-A11) nach Anspruch 2, wobei die Mehrzahl von Durchgangsbohrungs-Gebieten (430) durch das mindestens eine Bild identifiziert wird, wobei der Schritt des Verarbeitens des mindestens einen Bildes (A3, A2b'-A3') beinhaltet:
Berechnen eines Mittelpunktes (435) für jedes Durchgangsbohrungs-Gebiet (430), wobei der Mittelpunkt eine Position (D2, Db; Ds', Db') der entsprechenden Durchgangsbohrung (215) festlegt, und
Berechnen der Position der Reihe von Durchgangsbohrungen entsprechend den Positionen der Durchgangsbohrungen.

4. Verfahren (A1-A11) nach Anspruch 3, wobei die Reihe von Durchgangsbohrungen (215) eine erste End-Durchgangsbohrung (215u) sowie eine zweite End-Durchgangsbohrung (215d) aufweist, wobei der Schritt des Verarbeitens des mindestens einen Bildes (A3u, A2d'-A3d) beinhaltet:
Identifizieren eines ersten End-Durchgangsbohrungs-Gebietes (430e), das die erste End-Durchgangsbohrung repräsentiert, sowie eines zweiten End-Durchgangsbohrungs-Gebietes (403e'), das die zweite End-Durchgangsbohrung repräsentiert, und
Berechnen eines ersten Mittelpunktes (435) des ersten End-Durchgangsbohrungs-Gebietes sowie eines zweiten Mittelpunktes (435') des zweiten End-Durchgangsbohrungs-Gebietes, die Position (Ds, Db) der ersten End-Durchgangsbohrung beziehungsweise die Position (Ds', Db') der zweiten End-Durchgangsbohrung festlegend, wobei die Position der ersten Durchgangsbohrung und die Position der zweiten Durchgangsbohrung die Position (Ds, Db, Ds', Db') der Reihe von Durchgangsbohrungen repräsentieren.

5. Verfahren (A1-A11) nach Anspruch 4, wobei die Reihe von Durchgangsbohrungen (215) sich von einem ersten Eckteilbereich des Artikels (110) mit der ersten End-Durchgangsbohrung (215d) bis zu einem zweiten Eckteilbereich des Artikels mit der zweiten End-Durchgangsbohrung (215u) erstreckt, wobei der Schritt des Verarbeitens des mindestens einen Bildes (A3u, A2d'-A3d) für jeden Eckteilbereich beinhaltet.
Identifizieren eines Seitensegmentes (410s; 410s') und eines Rückensegmentes (410b; 410b'), die den Blattbereich (405; 405') begrenzen, wobei das Seitensegment und das Rückensegment mindestens einen Teilbereich einer entsprechenden Seitenkante (210u; 210d) beziehungsweise einer Rückenkante (210b) des mindestens einen Blattes (205), das zur Festlegung der Eckpostion anstößt, repräsentieren;
Identifizieren des entsprechenden End-Durchgangsbohrungs-Gebietes (410e; 410e') als die Gruppe von Pixelwerten in dem zweiten Wertebereich innerhalb des am nächsten zu dem Seitensegment gelegenen Blattgebietes;
Berechnen einer Seitenentfernung (Ds; Ds') und einer Rückenentfernung (Db; Db') des Mittelpunktes (435; 435') des End-Durchgangsbohrungs-Gebietes von dem Seitensegment beziehungsweise dem Rückensegment, wobei die Seitenentfernung und die Rückenentfernung die Position (Ds, Db, Ds', Db') der End-Durchgangsbohrung repräsentieren.

6. Verfahren (A1-A11) nach Anspruch 5, wobei der Schritt des Identifizierens des Seitensegmentes (410s; 410s') und des Rückensegmentes (410b; 410b') beinhaltet:
Identifizieren von zwei Seitenübergangspixeln (420s1, 420s2) entsprechend einem Übergang der Pixelwerte von dem zweiten Wertebereich in den ersten Wertebereich transversal zu einer erwarteten Richtung der Seitenkante (210s),
Berechnen einer geraden Seitenlinie (425s) entsprechend dem Seitensegment (410s), wobei die gerade Seitenlinie durch die Seitenübergangspunkte hindurchtritt,
Identifizieren eines Rückenübergangspixels (420b) entsprechend einem Übergang der Pixelwerte von dem zweiten Wertebereich in den ersten Wertebereich transversal zu einer erwarteten Richtung der Rückenkante (210b); und
Berechnen einer geraden Rückenlinie (425b) entsprechend dem Rückensegment (410b), wobei die gerade Rückenlinie senkrecht auf der geraden Seitenlinie steht und durch den Rückenübergangspunkt hindurch tritt.

7. Verfahren (A1-A11) nach Anspruch 6, wobei der Schritt des Identifizierens des Seitensegmentes (410s; 410s') und des Rückensegmentes (410b, 410') ferner beinhaltet:
Versetzen der geraden Rückenlinie (425b) in Richtung auf die innere Seite des Blattgebietes (405) durch einen vorbestimmten Offsetwert, der enthalten ist zwischen einem Maß (Di) einer erwarteten Irregularität der Rückenkante (210b) und einer erwarteten Entfernung (Dh) der Reihe von Durchgangsbohrungen (215) von einem internen Grenzwert der Rückenkante, und
Versetzen der geraden Rückenlinie in Richtung auf die Außenseite des Blattgebietes, bis eine Anzahl von Übergängen der Pixelwerte zwischen dem ersten Wertebereich und dem zweiten Wertebereich durch Scannen der geraden Rückenlinie beginnend von der Außenseite des Blattgebietes unterschiedlich von 1 detektiert wird.

8. Verfahren (A1-A11) nach irgendeinem der Ansprüche 5 bis 7, wobei der Schritt des Erlangens des mindestens einen Bildes (A1u-A2u, A1d-A2d) beinhaltet:
Erlangen eines ersten Bildes (305u), eine digitale Repräsentation des ersten Eckteilbereichs des Artikels (110) durch eine erste Digitalkamera (235u) liefernd, und
Erlangen eines zweiten Bildes (305d), das eine digitale Repräsentation des zweiten Eckteilbereiches des Artikels durch eine zweite Digitalkamera (235d) liefert,
und wobei der Schritt des Verarbeitens des mindestens einen Bildes (A3u, A2d'-A3d) beinhaltet:
Verarbeiten des ersten Bildes zum Bestimmen der Position der ersten End-Durchgangsbohrung (215u), und
Verarbeiten des zweiten Bildes zum Bestimmen der Position der zweiten End-Durchgangsbohrung (215d).

9. Verfahren (A1-A11) nach Anspruch 8, wobei der Schritt des Erlangens des mindestens einen Bildes (A1u-A2u, A1d-A2d) für jedes Bild (305u, 305d) beinhaltet:
Detektieren (A1u; A1d) einer Ankunft des entsprechenden Eckteilbereichs des Artikels (110) in einer Rahmungszone der entsprechenden Digitalkamera (235u; 235d), und
Auslösen (A2u; A2d) des Erlangens des Bildes in Abhängigkeit von der Detektion der Ankunft.

10. Verfahren (A1-A11) nach Anspruch 8 oder 9, wobei der Schritt des Verarbeitens des mindestens einen Bildes (A3u, A2d'-A3d) beinhaltet:
Kippen (A2d') des zweiten Bildes (305d) bezüglich einer Drehachse desselben (310), die parallel zu einer Vorschubrichtung des Artikels (110) ist, und
Verarbeiten (A3u, A3d) des ersten Bildes (305u) und des gekippten zweiten Bildes (305d') durch ein gemeinsames Verarbeitungsmodul (605).

11. Verfahren (A1-A11) nach irgendeinem der Ansprüche 5 bis 10, wobei der Schritt des Verifizierens der Korrektheit des Artikels (A4-A7) beinhaltet:
Verifizieren (A5) der Korrektheit des Artikels (110) gemäß eines Vergleiches des Seitenentfernung (Ds) und/oder der Rückenentfernung (Db) der ersten End-Durchgangsbohrung (215u) mit der Seitenentfernung (Ds') bzw. der Rückenentfernung (Db') der zweiten End-Durchgangsbohrung (215d).

12. Verfahren (A1-A11) nach irgendeinem der Ansprüche von 1 bis 11, wobei der Schritt des Verifizierens der Korrektheit des Artikels (A4-A7) beinhaltet:
Verifizieren (A6-A7) der Korrektheit des Artikels gemäß eines Vergleiches der Position (Ds, Db, Ds', Db') der Reihe von Durchgangsbohrungen (215) mit einem Bezugswert.

13. Verfahren (A1-A11) nach Anspruch 12, ferner folgende Schritte umfassend:
Erlangen (A1u-A2u; A1d-A2d) mindestens eines Probebildes (305u, 305d) für mindestens einen zu trainierenden Probeartikel (110),
Bestimmen (A3u, A2s'-A3s) einer Probeposition (Ds, Db, Ds', Db') der entsprechenden Reihe von Durchgangsbohrungen (215) durch Verarbeiten des mindestens einen Probebildes von jedem Probeartikel, und
Einstellen (A4) des Bezugswertes gemäß der mindestens einen Probeposition.

14. Verfahren (A1-A11) nach irgendeinem der Ansprüche von 1 bis 13, ferner folgende Schritte aufweisend:
Verwerfen (A8) des Artikels (110), wenn dieser gemäß einer negativen Verifikation seiner Korrektheit als defekt identifiziert wird.

15. Verfahren (A1-A11) nach irgendeinem der Ansprüche 1 bis 14, wobei die Artikel (110) in einer Stanzmaschine (105) gestanzt werden, wobei das Verfahren ferner folgenden Schritt umfasst:
Abschätzen (A10) einer gemäß der Position (Ds, Db, Ds', Db') der Reihe von Durchgangsbohrungen (215) mindestens eines Artikels auf die Stanzmaschine zu applizierenden Korrektur, wenn dieser gemäß einer negativen Verifikation seiner Korrektheit als defekt identifiziert wird.

16. Software-Programm (600) zum Ausführen des Verfahren (A1-A11) nach irgendeinem der Ansprüche 1 bis 15, wenn das Software-Programm auf einem Dateiverarbeitungssystem (150) ausgeführt wird.

17. Verifikationsvorrichtung (145, 155) zum Verifizieren einer Stanzung von Buchbinde-Artikeln (110), wobei die Verifikationvorrichtung eine Einrichtung (150) beinhaltet, die zum Steuern des Betriebs der Verifikationsvorrichtung zum Ausführen der Schritte des Verfahrens (A1-A11) gemäß irgendeinem der Ansprüche von 1 bis 15 konfiguriert ist.

18. Stanzmaschine (105) zum Stanzen von Buchbinde-Artikeln (110), wobei die Stanzmaschine die Verifikationsvorrichtung (145, 155) nach Anspruch 17 beinhaltet.

19. Buchbindungs-Fabrikanlage (100) mit mindestens einer Stanzmaschine (105) zum Stanzen von Buchbindeartikeln (110) und mit mindestens einer Verifikationsvorrichtung (145, 155) nach Anspruch 17.

## Revendications

1. Un procédé (A1-A11) pour vérifier une perforation d'articles de reliure (110), chaque article comprenant au moins une page (205) étant perforée pour définir une rangée de trous traversants (215) adaptés pour recevoir un élément de liaison pour lier un bloc d'articles (125), dans lequel pour chaque article le procédé comprend les étapes de:
acquérir (A1u-A2u,A1d-A2d) au moins une image (305U, 305D) de l'article, chaque image fournissant une représentation digital d'au moins une partie de bord de l'article comprenant au moins une partie de la rangée de trous traversants,
traiter (A3u,A2d'-A3d) l'au moins une image pour déterminer une position (Ds, Db, Ds',Db') de la rangée de trous traversants,
**caractérisé** de
vérifier (A4-A7) une validité de l'article selon la position de la rangée de trous traversants.

2. Le procédé (A1-A11) selon la revendication 1, dans lequel chaque image (305u,305d) comprend une pluralité de valeurs de pixels, les valeurs de pixels correspondant à l'au moins une page (205) ayant des intensités dans une première gamme et les valeurs de pixel correspondant aux trous traversants (215) et à une région au dehors de l'au moins une page ayant des intensités dans une deuxième gamme, l'étape de traiter l'au moins une image (A3u,A2d'-A3d) comprenant, pour chaque image:
identifier une zone de page (405) de l'image représentant au moins une partie de l'au moins une page, la zone de page étant formée par les valeurs de pixels dans la première gamme, et
identifier au moins une zone des trous traversants (430) de l'image chacun représentant un trou traversant correspondant, chaque zone de trou traversant étant formée par un groupe de valeurs de pixels dans la deuxième gamme à l'intérieur de la zone de page.

3. Le procédé (A1-A11) selon la revendication 2, dans lequel une pluralité de zones des trous traversants (430) sont identifiés dans l'au moins une image, l'étape de traiter l'au moins une image (A3,A2b'-A3') comprenant:
calculer un centre (435) de chaque zone de trou traversant (430), le centre définissant une position (Ds,Db;Ds',Db') du trou traversant correspondante (215), et
calculer la position de la rangée de trous traversants selon les positions des trous traversants.

4. Le procédé (A1-A11) selon la revendication 3, dans lequel la rangée de trous traversants (215) comprend un premier trou traversant d'extrémité (215u) et un deuxième trou traversant d'extrémité (215d), l'étape de traiter l'au moins une image (A3u,A2d'-A3d) comprenant:
identifier une première zone des trous traversants d'extrémité (430e) représentant le premier trou traversant d'extrémité et une deuxième zone des trous traversants (403e') représentant le deuxième trou traversant d'extrémité, et
calculer un premier centre (435) de la première zone des trous traversants d'extrémité et un deuxième centre (435') de la deuxième zone des trous traversants d'extrémité définissant la position (Ds, Db) du premier trou traversant d'extrémité et la position (Ds',Db') du deuxième trou traversant d'extrémité, respectivement, les positions des premier et deuxième trous traversants d'extrémité représentant la position (Ds,Db,Ds',Db') de la rangée de trous traversants.

5. Le procédé (A1-A11) selon la revendication 4, dans lequel la rangée de trous traversants (215) s'étend à partir d'une première partie de coin de l'article (110) avec le premier trou traversant d'extrémité (215d) à une deuxième partie de coin de l'article avec le deuxième trou traversant d'extrémité (215u), l'étape de traiter l'au moins une image (A3u,A2d'-A3d) comprenant, pour chaque partie de coin:
identifier un segment latéral (410s;410s') et un segment arrière (410b;410b') délimitant la zone de page (405;405'), le segment latéral et le segment arrière représentant au moins une partie de un bord latéral correspondant (210u;210d) et de un bord arrière correspondant (210b), respectivement, de l'au moins une page (205) raccordant à définir la partie de coin,
identifier la zone des trous traversants d'extrémité correspondante (430e;430e') comme le groupe de valeurs de pixels dans la deuxième gamme à l'intérieur de la zone de page la plus proche du segment latéral,
calculer une distance latérale (Ds;Ds') et une distance arrière (Db;Db') du centre (435,435') de la zone des trous traversants d'extrémité depuis le segment latéral et le segment arrière, respectivement, la distance latérale et la distance arrière représentant la position (Ds,Db,Ds',Db') du trou traversant d'extrémité.

6. Le procédé (A1-A11) selon la revendication 5, dans lequel l'étape d'identifier un segment latéral (410s;410s') et un segment arrière (410b;410b') comprend:
identifier deux pixels de transition latérale (420s1,420s2) correspondant à une transition des valeurs de pixels de la deuxième gamme à la première gamme transversalement à une direction attendue du bord latéral (210s),
calculer une ligne droite latérale (425s) correspondant au segment latéral (410s), la ligne droite latérale passant par les points de transition latérale,
identifier un pixel de transition arrière (420b) correspondant à une transition des valeurs de pixels de la deuxième gamme à la première gamme transversalement à une direction prévue du bord arrière (210b), et
calculer une ligne droit arrière (425b) correspondant au segment arrière (410b), la ligne droite arrière étant perpendiculaire à la ligne droite latérale et passant par le point de transition arrière.

7. Le procédé (A1-A11) selon la revendication 6, dans lequel l'étape d'identifier un segment latéral (410s;410s') et un segment arrière (410b;410b') comprend en outre:
déplacer la ligne arrière droite (425b) vers l'intérieur de la zone de page (405) par un offset prédéfini compris entre une mesure (Di) d'une irrégularité attendue du bord arrière (210b) et une distance attendue (Dh) de la rangée des trous traversants (215) depuis une limite interne du bord arrière, et
déplacer la ligne droite arrière vers l'extérieur de la zone de page jusqu'à ce qu'un nombre de transitions des valeurs de pixels entre la première gamme et la deuxième gamme étant détecté par balayager la ligne droite arrière à partir de l'extérieur de la zone de page est différent de 1.

8. Le procédé (A1-A11) selon l'une quelconque des revendications de 5 à 7, dans lequel l'étape d'acquérir au moins une image(A1u-A2u, Ald-A2d) comprend:
acquérir une première image (305u) fournissant une représentation digitale de la première partie de coin de l'objet (110) par une première caméra digitale (235U), et
acquérir une deuxième image (305d) fournissant une représentation digitale de la deuxième partie de coin de l'article par une deuxième caméra digitale (235d),
et dans lequel l'étape de traiter l'au moins une image (A3u,A2d'-A3d) comprend:
traiter la première image pour déterminer la position du premier trou traversant d'extrémité (215u), et
traiter la deuxième image pour déterminer la position du deuxième trou traversant d'extrémité (215d).

9. Le procédé (A1-A11) selon la revendication 8, dans lequel l'étape d'acquérir au moins une image(A1u-A2u, Ald-A2d) comprend, pour chaque image (305u,305d):
détecter (A1u;A1d) une arrivée de la partie de coin correspondant de l'article (110) dans une zone de prise de vue de la caméra digitale correspondante (235u;235d), et
déclencher (A2u;A2d) l'acquisition de l'image en réponse à la détection de l'arrivée.

10. Le procédé (A1-A11) selon la revendication 8 ou 9, dans lequel l'étape de traiter l'au moins une image (A3u,A2d'-A3d) comprend:
renverser (A2d') la deuxième image (305d) par rapport à un axe de symétrie de celle-ci (310) étant parallèle à une direction d'avance de l'article (110), et
traiter (A3u,A3d) la première image (305u) et la deuxième image renversée (305d') avec un module de traitement commun (605).

11. Le procédé (A1-A11) selon l'une quelconque des revendications de 5 à 10, dans lequel l'étape de vérifier la validité de l'article (A4-A7) comprend:
vérifier (A5) la validité de l'article (110) selon une comparaison de la distance latérale (Ds) et/ou la distance arrière (Db) du premier trou traversant d'extrémité (215u) avec la distance latérale (Ds') et/ou la distance arrière (Db') du deuxième trou traversant d'extrémité (215d), respectivement.

12. Le procédé (A1-A11) selon l'une quelconque des revendications de 1 à 11, dans lequel l'étape de vérifier la validité de l'article (A4-A7) comprend:
vérifier (A6-A7) la validité de l'article selon une comparaison de la position (Ds,Db,Ds',Db') de la rangée de trous traversants (215) avec une référence.

13. Le procédé (A1-A11) selon la revendication 12, comprenant en outre les étapes de:
acquérir (Alu-A2u,Ald-A2d) au moins une image d'échantillon (305U, 305d) pour au moins un article d'échantillon (110) à apprendre,
déterminer (A3u,A2s'-A3S) une position d'échantillon (Ds,Db,Ds',Db') de la rangée de trous traversants (215) correspondante avec traiter l'au moins une image d'échantillon de chaque article d'échantillon, et
affecter (A4) la référence selon l'au moins une position d'exemple.

14. Le procédé (A1-A11) selon l'une quelconque des revendications da 1 à 13, comprenant en outre l'étape de:
rejeter (A8) l'article (110) lorsqu'il est identifié comme étant défectueux en réponse à une vérification négative de la validité.

15. Le procédé (A1-A11) selon l'une quelconque des revendications de 1 à 14, dans lequel les articles (110) sont perforés dans une machine à perforer (105), le procédé comprenant en outre l'étape de:
estimer (A10) une correction à appliquer à la machine à perforer selon la position (Ds,Db,Ds',Db') de la rangée de trous traversants (215) d'au moins un article lorsqu'il est identifié comme étant défectueux en réponse à une vérification négative de la validité.

16. Un programme logiciel (600) pour exécuter le procédé (A1-A11) selon l'une quelconque des revendications de 1 à 15 lorsque le programme logiciel est exécuté sur un système de traitement de données (150).

17. Un appareil de vérification (145 155) pour vérifier une perforation d'articles de reliure (110), l'appareil comprenant des moyens de vérification (150) étant configurés pour commander le fonctionnement de l'appareil de vérification à effectuer les étapes du procédé (A1-A11) selon l'une quelconque des revendications 1 à 15.

18. Une machine à perforer (105) pour perforer des articles de reliure (110), la machine à perforer comprenant l'appareil de vérification (145 155) selon la revendication 17.

19. Une installation de reliure (100) comprenant au moins une machine à perforer (105) pour perforer d'articles de reliure (110), et au moins un dispositif de vérification (145 155) selon la revendication 17.
